# EUROPEAN PATENT SPECIFICATION

(11) **EP 1 568 628 B1**
(45) Date of publication and mention of the grant of the patent: **15.08.2007**
(21) Application number: 05001802.7
(22) Date of filing: 28.01.2005
(51) Int. Cl.: B65G 21/14, B65G 43/00

(54) **Extendable conveyor**
Teleskopisch ausfahrbarer Bandförderer
Transporteur à bande télescopiquement extensible

(30) Priority: 30.01.2004 EP 04002081; 10.09.2004 EP 04021518
(43) Date of publication of application: 31.08.2005
(73) Proprietor: Caljan Rite-Hite ApS, 8361 Hasselager (DK)
(72) Inventor: Petersen, Erik Steen, 8270 Hojbjerg (DK)
(74) Representative: Niederkofler, Oswald

(56) References cited:
- US-A- 3 835 980
- US-A- 6 006 893

## Description

### Field of the Invention

The present invention relates generally to conveyors, such as telescopic belt or roller conveyors, and more particularly, to conveyors with a base conveyor section and at least one moveable conveyor section selectively positionable relative to the base conveyor section or the next inner conveyor section, according to the preamble of Claim 1.

### Background of the Invention

Conveyors of the type mentioned above are known and used in the art. For example, US-A-4 643 299 discloses a telescopic belt conveyor comprising a first basic conveyor section within a longitudinal housing, which at one end is provided with an opening, through which a number, by way of example two, three or more, of telescopic conveyor sections are arranged within each other. These telescopic conveyor sections may be telescopically moved in and out in relation to each other, as the conveyor sections are mutually connected by means of a suitable system of drive members, such as drive chains, and in relation to said basic conveyor section, which is provided with a common drive system for controlling the telescopic movement.

In US-A-3 835 980 a telescopic belt conveyor structure is disclosed having limit switches mounted at the free end of an outermost extendable boom section. These limit switches are actuated by a plate attached at the boom section when the plate engages an obstacle as the boom section is being extended. When the switch is actuated the movement of the conveyor booms is stopped.

However, the known extendable or telescopic conveyors are encumbered with some disadvantages which may cause serious working accidents. There is a risk, especially during the telescopic movement of the respective telescopic conveyor sections, that personnel may get hands or fingers squeezed between the respective conveyor sections. Another potential risk is that the drive chains of the intermediate conveyor sections, when the undersides these sections are exposed during outward and inward movements, may cause damages especially to hands and fingers.

### Summary of the Invention

Thus it is an object of the invention to improve safety for the user during operation of a conveyor with at least one moveable conveyor section, such as a telescopic belt or roller conveyor.

According to an aspect of the invention a conveyor comprises a base conveyor section, at least one moveable conveyor section selectively positionable relative to the base conveyor section and a conveyor member arranged to provide a conveying surface on said conveyor section. At least one drive system is arranged to drive at least one of the movable conveyor section and the conveyor member and a contact sensor connected to a control device for interrupting the movement of at least one of the conveyor member and the movable conveyor section in response to a signal generated by the contact sensor wherein said contact sensor comprises at least one actuation element adapted for transferring both vertical and horizontal contact forces to said contact sensor and said actuation element being adapted to move at least partially in the direction of the vertical contact force.

Further aspects of the invention are set forth in the dependent claims, the following description and the drawings. Each of these aspects may be used in combination or alone without leaving the scope of the invention.

### Brief Description of Drawings

Embodiments of the invention will now be described, by way of example, and with reference to the accompanying drawings, in which:
- Fig. 1: shows a schematic plane side view of the course of an endless conveyor belt in an embodiment for a telescopic belt conveyor,
- Fig. 2: shows a corresponding side view of an outer part of the telescopic belt conveyor shown in Fig. 1,
- Fig. 3: shows a simplified side view of an embodiment of a telescopic belt conveyor with partly extended conveyor sections.
- Fig. 4: shows a plane schematic side view of an embodiment for a telescopic belt conveyor - shown with the telescopic conveyor sections in a retracted position,
- Fig. 5: shows a corresponding plane view of the course of drive chains between the respective telescopic conveyor sections - shown in a partly extended position in relation to a basic conveyor section,
- Fig. 6: shows a side view of an outermost part of the telescopic belt conveyor shown in Fig. 4 in an extended position,
- Fig. 7: shows a simplified side sectional view through an outermost part of the belt conveyor position cf. Fig. 4 in a retracted position,
- Fig. 8: shows an enlarged view of an indicated circular section in Fig. 7,
- Fig. 9: shows a simplified transverse sectional view through an outermost part of the telescopic belt conveyor cf. Fig. 4,
- Fig. 10: shows an enlarged view of an indicated circular section in Fig. 9,
- Fig. 11: shows a schematic detailed view of a pivot switch at the front end of said intermediate conveyor sections and said basic conveyor section in a telescopic belt conveyor according to the invention,
- Fig. 12: shows a schematic detailed view of a contact sensor at the outermost conveyor section of a telescopic belt conveyor according to the invention,
- Fig. 13: shows a simplified side view of another embodiment of a telescopic belt conveyor with partly extended conveyor sections,
- Fig. 14: shows a plane schematic side view of an embodiment for a telescopic belt conveyor - shown with the telescopic sections in a retracted position,
- Fig. 15: shows a corresponding plane view of the course of drive chains between the respective telescopic conveyor sections - shown in a partly extended position in relation to a basic conveyor section,
- Fig. 16: shows a transverse sectional view through said embodiment for a telescopic belt conveyor,
- Fig. 17: shows a side view of an alternative embodiment for a telescopic belt conveyor according to the invention,
- Fig. 18: shows a side view of a further preferred embodiment for a telescopic belt conveyor according to the invention,
- Fig. 19: shows a side view of an embodiment for a short individually-adjustable front belt conveyor section for a telescopic belt conveyor according to the invention,
- Fig. 20: shows a perspective view of a front nose part of either a telescopic belt conveyor cf. Fig. 17 or an adjustable front belt conveyor cf. Fig. 19, and
- Fig. 21: shows a detailed side view - partly in section - of the actuation element of the front nose part cf. Figs. 19 and 20 according to the invention.

### Description of Preferred Embodiments

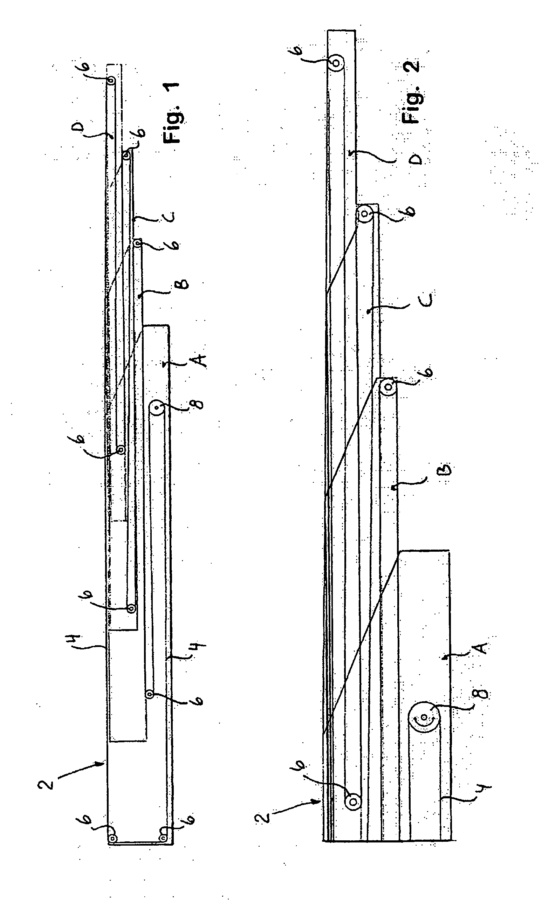

Fig. 1 shows a side view of an example of a conveyor according to the present invention: a telescopic belt conveyor. However, before proceeding further with the detailed description of Fig. 1, a few items of some of the preferred embodiments of the present invention will be discussed.

In these embodiments, a contact or an impact of at least one of the moving parts of a conveyor during its operation with the environment, e.g. a person, a vehicle, etc., is detected. For preventing damages due to such contacts the conveyor is provided with one or more contact sensors which are adapted to detect both horizontal and vertical as well as in between lying contact or impact forces, i.e. horizontal and/or vertical forces. The contact sensor may be a single element or group of cooperating elements and may be disposed at various places at the moveable conveyor as well as may be of various types, such as electrical or mechanical switches.

In all embodiments the conveyor comprises a base conveyor section, which, e.g. can be mounted on a floor or can be moveable on tracks, rollers, etc., one or more moveable sections and a conveyor member arranged to provide a conveying surface on the conveyor sections. Such conveyor member is, for example, provided by an endless conveyor belt or conveyor rollers.

In some embodiments the moveable conveyor sections are extendable conveyor sections which are extendable or telescopically moveable between a retracted position and an extended position relative to the next inner extendable conveyor section or the base conveyor section. In other embodiments the moveable conveyor section is attached to a conveyor section and adapted for a pivotal movement relative thereto. Also a combination of both types of movable conveyors sections is possible. For example, in another embodiment the pivotally moveable section is mounted at the free end of an outermost extendable conveyor section. In another embodiment, on one end of the base conveyor section a pivotally moveable section is mounted and on the opposed end of the base conveyor section at least one extendable conveyor section is mounted. Alternatively, on both sides of the conveyor a pivotally moveable section is mounted, i.e. on one side of the base conveyor section and on the other side on the outermost extendable conveyor section.

In another embodiment the base conveyor section and therefore the whole conveyor is pivotally movable in upward and downward directions. For instance, on one side of the base section hydraulic or pneumatic cylinders are mounted which are adapted to lift or lower the base conveyor section resulting in an inclined position of the conveyor surface.

At least one drive system arranged to drive at least one of the moveable conveyor sections and the conveyor member is provided. The drive system comprises, for example in case of the extendable conveyor sections, drive chains which mutually connect the extendable conveyor sections and are driven by an electric drive motor located in the base section or in the next outer extendable section. The pivotally moveable conveyor section may be driven, for example, by a hydraulic or pneumatic cylinder or by an electric device. The conveyor belt or the conveyor rollers are driven independently from the moveable conveyor sections, e.g. by an additional electric drive motor. The movements of both the conveyor member and the moveable conveyor sections are controlled by a control device which is adapted to interrupt the movement of at least one of the conveyor member and the at least one movable conveyor section, such as the outermost extendable or pivotable conveyor section, in response to a signal generated by a contact sensor. In another embodiment brakes or a brake system are arranged to interrupt at least one of the conveyor member and the moveable conveyor section movement and are controlled by the control device. The brake system may comprise an electric brake device, for example, which is adapted to engage when a conveyor section movement is stopped at least by power failure, chains braking, sensing operational failures of the conveyor or by an operator's activity. In another embodiment the brake is adapted to be biased closed and actuated to a release position only when power is available and an operator deliberately activates a switch.

The contact sensor comprises at least one touch-activated actuation element for transferring both vertical and horizontal contact forces to the contact sensor. In some embodiments the contact sensor may comprise at least one electric switch which is directly activated by the movement of an associated actuation element. The actuation element may be a single member or group of members cooperating in such a manner to transfer both vertical and horizontal contact forces to the contact sensor.

The actuation element is formed such that it provides a contact surface for receiving forces from both the vertical and horizontal directions. Pref erably this is achieved by, e.g. a wall or shield part which is mounted for allowing pivotal movement in respect to the contact sensor. Preferably, the wall or shield part is mounted at one side of the base section where the movable section is arranged. When, for example, a user engages the underside of the movable section with his hand or fingers during a retraction movement of the movable section, the actuation element receives the basically horizontal contact force of the hand or the fingers. In response the contact sensor generates a signal and the control device interrupts the movement of the movable section in response to the generated signal. In another preferred embodiment the actuation element has a semi-circular shape. In this embodiment the semi-circular actuation element is, for example, pivotally mounted at an upper transverse axis. By this way - due to the shape and the upper transverse displaced pivot axis - the semi-circular actuation element transfers both horizontal and vertical forces or any combination thereof into a corresponding rotational-like movement. As explained above, due to the movement of the actuation element the contact sensor generates a signal and the control device stops the movement of at least one of the movable section and the conveying member in response to the signal. In still another embodiment the actuation element provides additional shielding and protection function due to its shape or mounting position at the moveable conveyor section and, e.g. comprises a semi-circular shield part.

The actuation element additionally comprises a control box for controlling the conveyor. Such control functions are, for example, start and stop instruction of the movement of the movable conveyor section as well as of the conveyor member, an emergency stop, a joystick for controlling the movement of the pivotally movable section or of the base section, switches for turning on/off lights, hydraulic pumps, etc. In another embodiment the actuation element additionally comprises openings for transmitting light emitted from a light source which is, e.g. also mounted in the actuation element.

In another embodiment the actuation element comprises a transverse elongate nose part on an outermost end of the movable conveyor section which is enabled to be pressed in at least one of an upward and inward direction against one or more compression springs by an upwardly or inwardly directed compression impact. In still another embodiment the nose part can additionally comprise openings and a light source mounted behind said openings and inside of the nose part.

In another embodiment the conveyor further comprises a short belt conveyor section at an outermost or front position being adapted to swing relative to the base conveyor section or to the next inner conveyor section. In this embodiment the actuation element is preferably mounted at the outermost end of the short belt conveyor section.

In some embodiments the actuation comprises end flanges which are arranged in bearing holes mounted at the outermost end of the movable conveyor section. For instance, in a preferred embodiment the elongate nose part, explained above, is mounted by this way. In this embodiment the actuation element is - due to the above explained mounting - adapted to be displaced in both vertical and horizontal directions and to activate said contact sensor. As mentioned above, such contact sensor comprises in some embodiments an electric switch which is activated by a movement or displacement of the actuation element.

In the embodiments one or more actuation elements may be placed in different locations at the moveable conveyor or base conveyor sections. For instance, in a preferred embodiment the actuation element is mounted at the outermost end of the outermost of the at least one movable conveyor section. In this embodiment the actuation element is displaced when receiving a contact force during the movement of the moveable conveyor section or of the base section, e.g. when a user gets his foot under a pivotally movable conveyor section or when a personnel loading or unloading a truck is squeezed by an extending conveyor section.

In another preferred embodiment the actuation element extends over the whole width of the movable conveyor section.

Returning now to the specific embodiment of Fig. 1, the telescopic belt conveyor 2 comprises four sections, namely a basic section A, two intermediate sections B and C and an outermost section D. The sections B, C and D may be moved in and out in a telescopic manner in relation to each other and in relation to the basic section A. The belt conveyor 2 comprises an endless conveyor belt 4, which (cf. Figs 1 and 2) is lead around a number of stationary reversing rollers 6 in the respective sections A-D, and which is driven by a common, reversible drive roller 8, which is positioned in section A, and which is driven by a motor, illustratively an electric driving motor, although hydraulic or other motor types could be used.

The telescopic movement of the sections B-C may be carried out in a variety of ways.

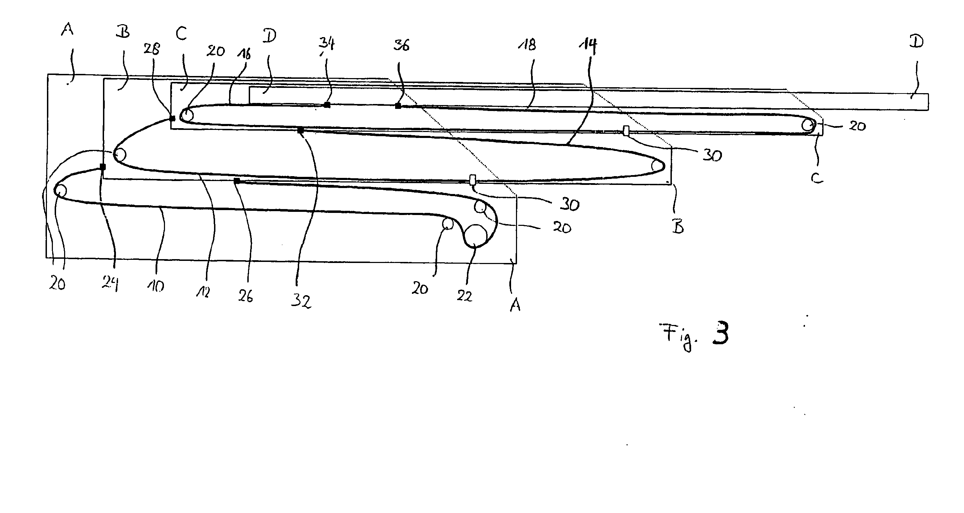

In Fig. 3 a schematic view of the telescopic belt conveyor is shown. In this embodiment the conveyor sections are moved by chains 10, 12, 14, 16, and 18, respectively. The chains run over a stationary sprocket wheels 20 and only chain 10 is driven by a wheel 22 connected to a motor. The chain 10 runs in the basic section A and is connected at its ends on the next outer conveyor section B at connection points 24 and 26, while the chains 12 and 14 run in an ellipse-like course in conveyor section B and are mounted at its ends on conveyor section C at connection points 28 and 32. Chains 14 and 18 which move section D run in a similar fashion. By this way of connecting the single conveyor sections to each other, the drive force of chain 10 is carried over the other chains 12, 14, 16 and 18 and the conveyor sections B, C and D are moved simultaneously inwardly or outwardly. Chains 12 and 16 move the conveyor sections C and D backwards and chains 14 and 18 forwards. In this embodiment the chains 12 and 14 are connected together as well as chains 16 and 18 at a common anchor point 30 where, additionally, a bracket or chain mounting is mounted. This bracket is mounted on the base section A (or section B, respectively) and raises the chain at the common anchor point 30 of the corresponding chains 12, 14 and 16, 18. Additionally In another embodiment the forward leading chains are raised by corresponding sprocket wheels 20, which are in a raised position, too.

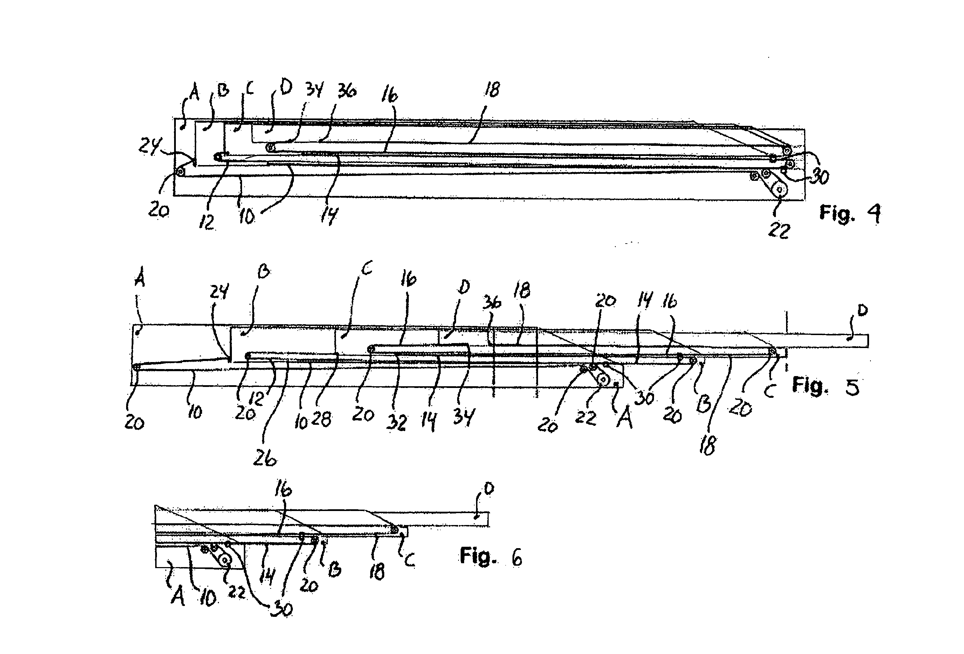

Figures 4-6 show a more detailed view of the telescopic belt conveyor of this embodiment. The movement of the conveyor sections is carried out by means of elongated drive members in the form of chains 10, 12, 14, 16 and 18, which are disposed at opposite long sides of the belt conveyor 2. The drive chains 10, 12, 14, 16 and 18 run between the respective sections A-D around stationary sprocket wheels, as opposite ends of each of the drive chains 10, 12, 14, 16 and 18 are anchored to two sections. The drive chains 10 are furthermore led around driving sprocket wheels 22, which are placed in the front end of section A, and which are driven by means of a reversible electric driving motor (not shown). End parts of the drive chains 10 are anchored at 24 to a rearmost end part of section B, from where the drive chains 10 are led around stationary sprocket wheels 20 into the rearmost end of the basic section A and forward around a second stationary sprocket wheels 20, around the drive sprocket wheels 22 and back again a third around stationary sprocket wheels 20 to anchor points 26 at the underside of section B some distance in front of the rearmost end of section B.

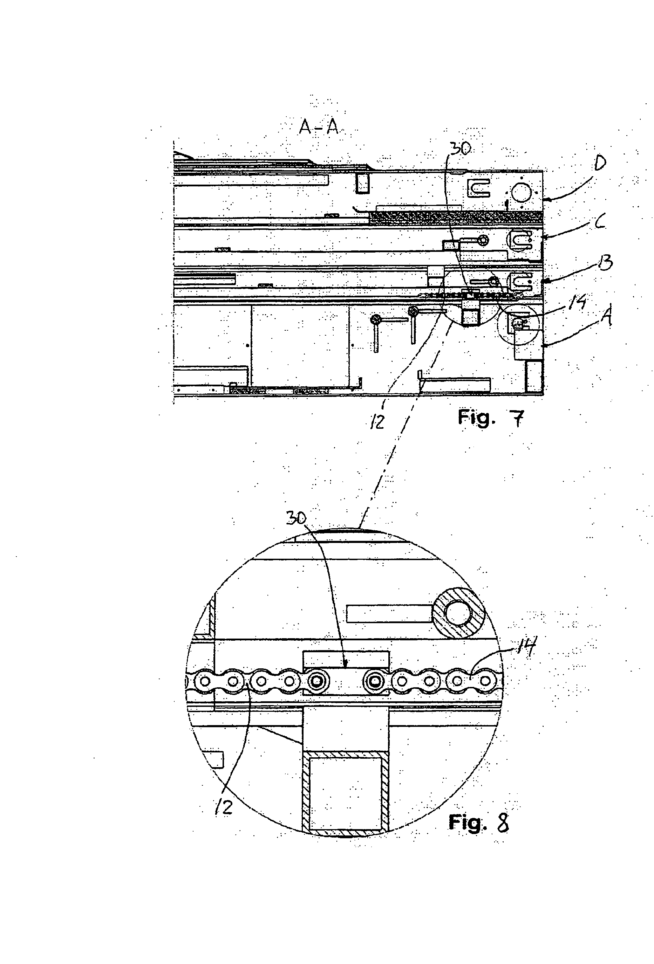

Similarly, end parts of the drive chains 12 are rearmost in section C anchored at 28, from where the drive chains 12 are led around stationary sprocket wheels 20 placed in the rearmost end of section B and forward to the rear sides of cranking chain mountings 30 (Fig. 7) in the front end of basic section A. End parts of the drive chains 14 are anchored to the front side of the same chain mounting 30 in the front end of basic section A, from where the drive chains 14 are led forward and around stationary sprocket wheels in the front end of section B and again backwards to anchor points 32 on the underside of section C some distance in front of the anchor points 28.

In a similar manner, end parts of the drive chains 16 are anchored at 34 rearmost in section D, from where the drive chains 16 are led backwards around stationary sprocket wheels placed rearmost in section C and again forward to the rear sides of cranking chains mountings 30 in the front of section B. End parts of the drive chains 18 are anchored to the front sides of the same chain mounting 30 in the front of section B, from where the drive chains 18 are led forward and around stationary sprocket wheels 20 in the front end of section C and again led backwards to anchor points 36 on the underside of section D some distance in front of the anchor points 34.

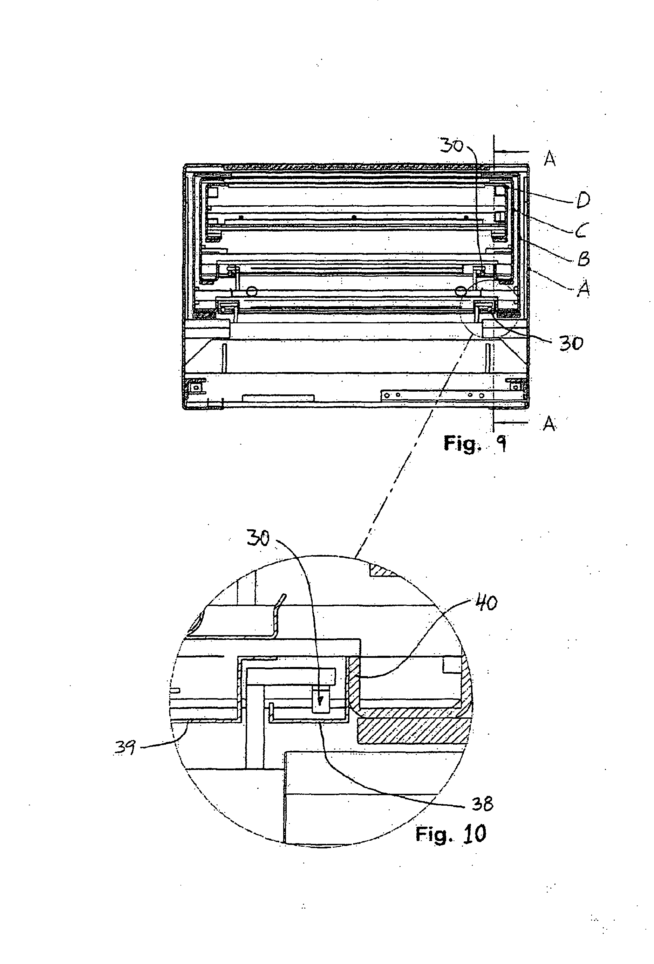

Figures 7-10 show the position and more details about the cranking chain mountings 30 as discussed above, which are placed in the front ends of sections A and B, and which are used for the anchoring of end parts of the drive chains 12, 14, 16 and 18. Furthermore, the embodiments of Figs. 9 and 10 show longitudinal coverings 38 for the lower course of the drive chains 14 and 18 by the intermediate sections B and C. These longitudinal coverings 38 are at both sides of the belt conveyor 2 suspended at the inside of longitudinal carrying girders 40 of the intermediate sections B and C.

In this embodiment the longitudinal coverings are made possible by the configuration of cranking mountings 30, which serve to raise the lower runs of chains 12, 14, 16 and 18 above their conventional positions without chain mountings 30. Without this raising of the lower runs of the chains, the longitudinal coverings would not be possible, as they would be in an interfering position between sections such as would prevent proper telescopic operation.

In a preferred embodiment, the entire underside of each of the telescopic conveyor sections results to be closed or covered by the combination of the chain guard 38 and the belt guard 39 - as shown to the left of Fig. 10. The raised anchor points 30 for the chains allows the chain guard 38 to be positioned as it is, and fills the side gap that used to exist where the belt guard 39 ended and the unguarded chains ran. The combination of the chain guard 38, the bracket for holding mountings 30 and the belt guard 39 present what is in effect a closed bottom, although not the complete closed bottom of the preferred embodiment.

In these embodiments the respective conveyor sections B, C and D in relation to each other and in relation to the basic conveyor section - as per se known - are supported and guided in the transverse direction by means of stationary rollers provided with external guiding flanges, which cooperate with longitudinal carrying girders.

Fig. 11 shows a schematic detailed view of an embodiment of a front end part of the sections A, B or C where an actuation element in the form of an upper transverse plate part 42 is provided on a lower hinge 44 so that the plate part 42 is able to be swung inwardly enabling it to get into contact with an electric switch 46. The telescopic movement of the sections B, C and D is then at once interrupted by the control device in response to a signal received from said electric switch 46. The plate part 42 is spring activated or biased to return to its normal vertical position, when an item, finger or hand of a use, which has caused the emergency stop is removed and the electric switch has been closed again.

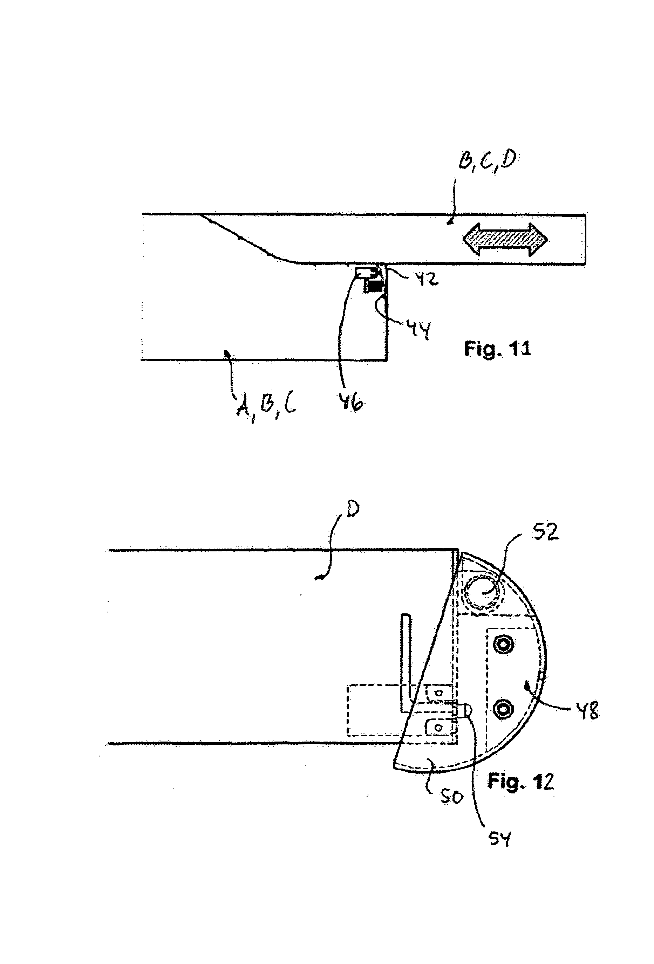

Fig. 12 shows a schematic detailed view of an actuation element of another preferred embodiment. The actuation element is disposed at the outermost end of section D in the form of a transverse shield 48 having a semi-circular cross-section and semi-circular end walls 50. The length of the shield 48 extends over the whole width of the conveyor section D. The shield 48 is a unit pivotally suspended around an upper transverse axis 52 such that the shield 48 can be swung inwards/upwards against a number of compression springs, whereby the shield 48 will engage an electric switch 54. A control device instantly stops any telescopic movement and/or a possible tipping movement in response to a signal received from the electric switch 54, if the belt conveyor 2 also has a vertical tipping function of one or more conveyor sections.

In still another embodiment shield 48 is arranged in such a manner that it is displaceable in the transverse direction in relation to the outer end of the conveyor section D and that such a transverse displacement of the shield 48 in relation to the outer end part of section D would activates an electric switch and the control system causes interruption of any transverse swinging movement of the outer end of conveyor section D in response to a signal received from the electric switch..

In the above embodiments, due to its shape and suspension the shield 48 also acts as a switch for downward directed forces so that a possible downward tipping movement of the outermost section is instantly interrupted, if a person, for example, gets a foot squeezed under the front end of the outermost section D.

The arched front side of the shield 48 is advantageously provided, e.g. with openings, so that a light source positioned inside the shield 48 lights the area outside the front end of the belt conveyor 2. This is in particular advantageous if the belt conveyor is lead into the truck body for the loading or unloading of goods or parcels.

In another embodiment, in the arched front side or in a plane side wall of the shield 48 a control box is built-in with push-button switches for operation of said light source and the respective drive motors of the telescopic belt conveyor for start/stop of the conveying belt and of the telescopic movement of the conveyor sections.

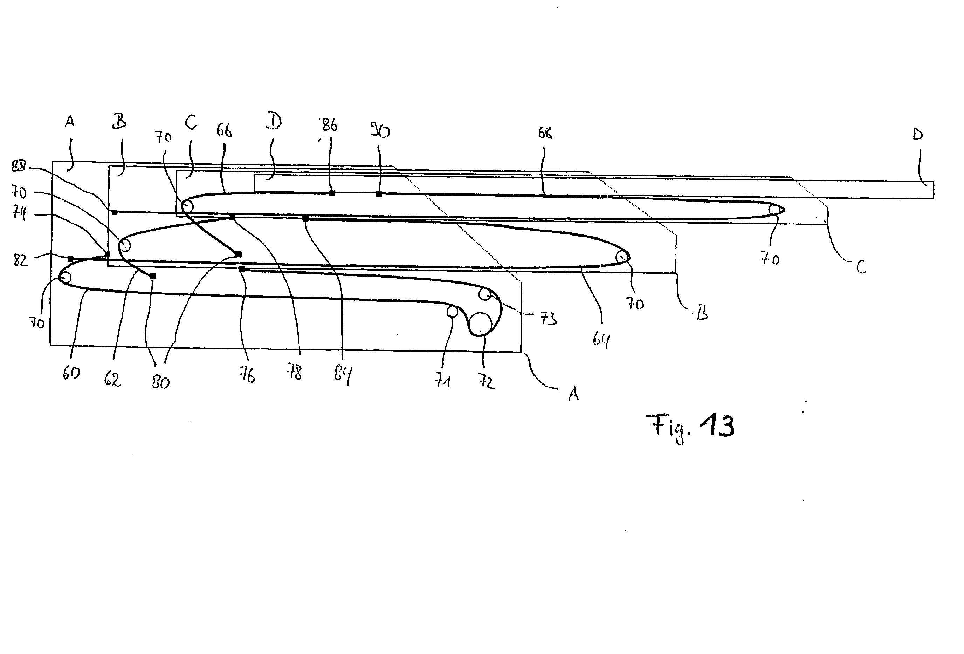

According to another aspect of the invention, in a preferred embodiment for a telescopic belt conveyor 56 the course of the endless conveyor belt 4 is in principle just the same as shown in Figs. 1 and 2, while the course of the respective drive chains as shown in Figs. 13-16 is indeed different than that of the course of the drive chains 10, 12, 14, 16 and 18 by the telescopic belt conveyor 2 as described above with reference to Figs. 3-10.

The telescopic belt conveyor 56 comprises four sections, namely a basic section A, two intermediate sections B and C and an outermost section D. The sections B, C and D may be moved in and out in a telescopic manner in relation to each other and in relation to the basic section A. The belt conveyor 56 comprises an endless conveyor belt 4, which cf. Figs 1 and 2 is lead around a number of stationary reversing rollers 6 in the respective sections A-D, and which is driven by a common, reversible drive roller 8, which is positioned in section A, and which is driven by a motor such as an electric or hydraulic driving motor.

The drive chain configuration according to this embodiment is schematically shown in Fig. 13. According to a general aspect of the invention, the forward- and backward-leading chains 60, 62, 64, 66, and 68, as shown in Fig. 13, are separate and separately mounted. The forward leading chains 64 and 68 extend through an open rear wall of the conveyor sections B and C, respectively. At one end the forward leading chain 64 is mounted on conveyor section C at position 84 and on the rear end of conveyor section A at position 82. Similarly, the ends of chains 68 are mounted on conveyor section D at position 90 and on the rear end of conveyor section B at position 88. The mounting points 82 and 88 are at such a height that the forward-leading chains 64 and 68 do not cross the bottom of the corresponding conveyor sections B and C, respectively. The backward-leading chains are guided through the bottom at the rear end of conveyor sections B and C. The other end points of the backward-leading chain 62 are mounted in the base conveyor section A at position 80 and on conveyor section C at position 78. Similarly, the end points of the backward leading chain 66 are mounted at position 80 in conveyor section B and at position 86 on conveyor section D.

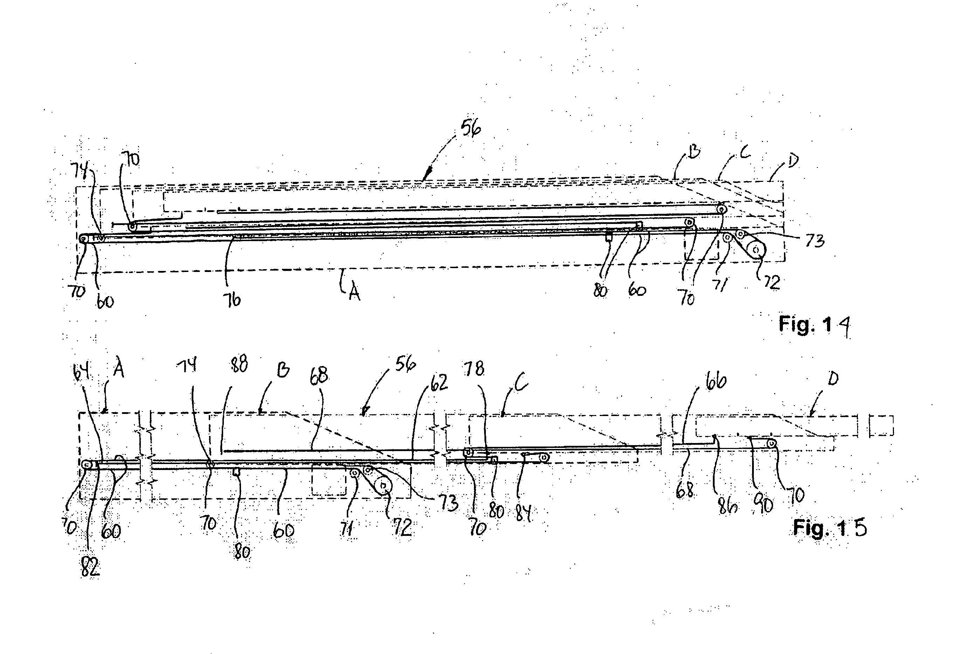

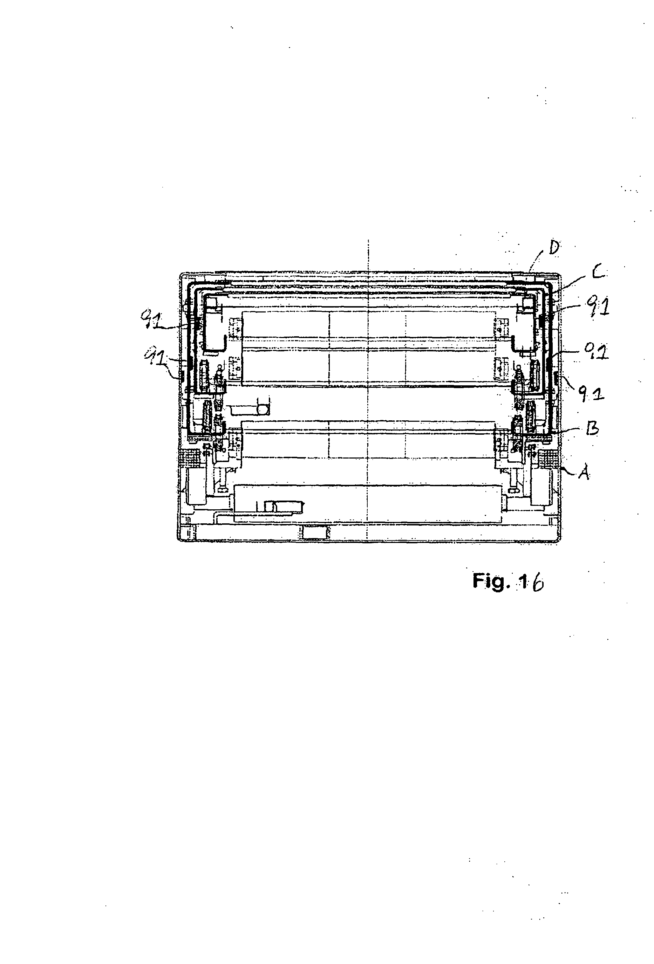

Fig. 14 and 15 show a detailed view of the embodiment. The telescopic movement of the sections B-C is carried out by means of drive chains 60, 62, 64, 66 and 68, which are disposed at opposite longitudinal sides of the belt conveyor 56 and run between the respective sections A-D around sprocket wheels mounted stationary in the respective sections A-D, as opposite ends of each of the drive chains 60, 62, 64, 66 and 68 are anchored to two sections. The drive chains 60 are furthermore led around driving sprocket wheels 72, which are placed in the front end of section A, and which are driven by means of a (not shown) reversible electric or other driving motor. End parts of the drive chains 60 are anchored at 74 to a rearmost end part of section B, from where the drive chains 60 are led around stationary sprocket wheels 70 into the rearmost end of the basic section A and forward around stationary sprocket wheels 71, around the drive sprocket wheels 72 and back again around stationary sprocket wheels 73 to anchor points 76 on the underside of section B some distance in front of the rearmost end of section B.

End parts of the drive chains 62 are rearmost in section C anchored at 78, from where the drive chains 62 are led around sprocket wheels 70 mounted on the rearmost wall section B and forward to chain mountings 80 in the front end of basic section A. End parts of the drive chains 64 are anchored near the rearmost end of section A at 82, from where the drive chains 64 are led forward and around stationary sprocket wheels 70 in the front end of section B and again backwards to anchor points 84 on the underside of section C some distance in front of the anchor points 78.

End parts of the drive chains 66 are anchored at 86 rearmost in section D, from where the drive chains 66 are led backwards around sprocket wheels mounted 70 on the rearmost wall of section C and again forward to chains mountings 80 in the front of section B. End parts of the drive chains 68 are anchored near the rearmost end of section B at 88, from where the drive chains 68 are led forward and around stationary sprocket wheels 70 in the front end of section C and again led backwards to anchor points 90 on the underside of section D some distance in front of the anchor points 86. The embodiment of Fig. 16 shows that the various sprockets wheels 70 may be offset laterally to achieve the orientation of the chains shown in Figs. 14 and 15.

One of the benefits of the drive chains in this preferred embodiment is that there is basically an absence of chain runs (top or bottom) passing through the plane defined by the bottom of sections B, C or D, or at least the parts thereof exposed during telescopic movement. As a result, the undersides of these sections or at least the parts of the undersides exposed during the telescopic movement may be provided with closed coverings preventing any possible penetration into the underside of the sections and thus preventing accidents causing damage to hands, fingers or other body parts of the user, which could otherwise be damaged or injured by engaging said undersides during said telescopic movement.

In this embodiment, this benefit is obtained by the fact that the anchor points of the drive chains, such as anchor points 82 and 88 for drive chains 64 and 68, respectively, are disposed at a suitable height to allow their bottom runs to be led through the opening in the rear of sections B and C and to stay above the undersides thereof. Further, the sprocket wheels 70 mounted at the rearmost walls of sections B and C and at the bottom thereof make it possible that the drive chains 62 and 66 may also be led through openings in the rear walls of sections B and C, and then have a lower run below the underside of the respective sections, but only in an area that will not be exposed during the telescopic movements. Accordingly, the undersides of these sections or at least the parts of the undersides exposed during the telescopic movements may be provided with coverings.

In the embodiment of Fig. 16 the aforementioned brakes between the respective telescopic conveyor sections A-D are designated as 91. Preferably the brakes 91 for braking the mutual telescopic movement between the basic conveyor section A and the intermediate conveyor section B are mounted on the outer basic conveyor section A.

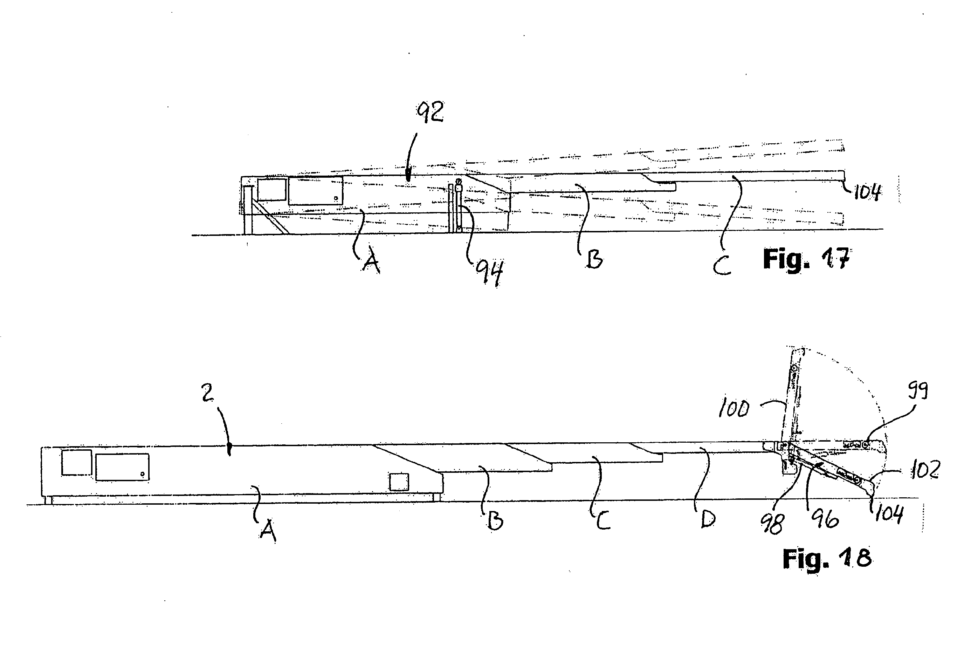

Fig. 17 shows an alternative embodiment for a telescopic belt conveyor 92 wherein the basic section A of the telescopic belt conveyor 92 at opposite sides is provided with one or more adjustment cylinders 94. With these adjustment cylinders 94 the conveyor as a whole can be tipped between a raised and a lowered position of the front end section C of the telescopic belt conveyor 92 in order to make it easier to load heavy loads onto the front end section C - e.g. when loading or unloading lorries, trucks or the like.

Alternatively, as shown in Fig. 18, the outermost telescopic section D of the telescopic belt conveyor 2 according to the invention is provided with a particular short front belt conveyor 96 (so called "droop snoot"), which can be pivoted between an raised position 100 and a lowered position 102 and any positions in between by a hydraulic or pneumatic operated cylinder 98 in order to facilitate unloading or loading of heavy loads from or onto the front end section D of telescopic belt conveyor 2 - when, for example, unloading or loading lorries, trucks or the like. The short front belt conveyor 96 has a separate conveyor belt 99 providing an adjustable conveying surface.

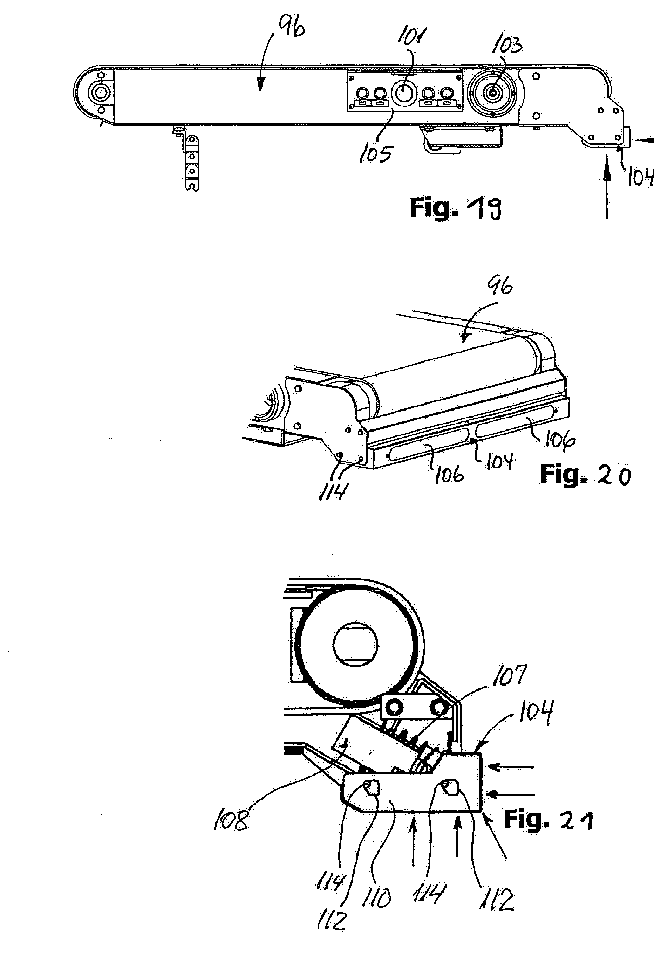

Fig. 19 shows a side view of an embodiment of the said short individual adjustable front belt conveyor 96 which at a front end is provided with an actuation element in the form of a transverse elongated nose part 104, which can be pressed upwards and/or inwards against one or more compression springs 107 by an upwardly or inwardly directed compression impact. As in the embodiments, said nose part 104 interacts with said electrical switch 108 which sends a signal to the control device. In another embodiment the actuation element 48 according to the embodiments discussed above may also be arranged at the free end of the belt conveyor 96.

At least one side of the front belt conveyor 96 is provided with a control panel 105 comprising even a joy stick 103 for operating the telescopic and/or tipping movement of the respective sections of the telescopic belt conveyor controller. And the control panel 105 also comprises an emergency stop switch 101 together with more switches, e.g. for turning on/off light sources, hydraulic pumps etc.

Furthermore the telescopic belt conveyor 92 according to an embodiment the invention is provided such that said nose part 104 in a forward surface may be provided with openings 106, and that a light source is mounted inside said nose part 104, which is also shown in Fig. 20.

In principle, the touch activated actuation element in the form of the transverse nose part shown in Figs. 20 and 21 also represent the nose part 104 of the section C of the telescopic belt conveyor 92 shown in Fig. 17.

Fig. 21 shows in more detail the way how the transverse nose part 104 is arranged in a so-called floating manner as end flanges 110 provided with enlarged bearing holes 112 allow the nose part 104 as a whole to be displaced both in vertical and horizontal directions in relation to rigid bolts 114 against said one or more compression springs 107 and to activate said electrical switch 108. The electric switch 108 sends a signal when activated to a control device which in response to the signal interrupts the movement of at least one of the conveyor section and the conveyor belt.

Other embodiments of the invention also exist with drive chains on one side of the conveyor sections only and/or the drive chains or at least some of them are substituted by wire ropes and corresponding sprocket wheels are substituted by sheaves. Additionally some embodiments comprise only a base conveyor section and one moveable conveyor section.

In the preferred embodiments above, the configuration of the actuation element in combination with the contact sensor enables that any contact of the actuation element with, e.g. a user's hand, is sensed in horizontal as well as in vertical and all in between lying directions. This prevents to injure a user or personnel being near the conveyor when moving the conveyor sections or other parts of the conveyer, such as extendable or pivotally moveable sections. A further benefit of the configuration of the actuation element is the additional shield function of the actuation element due to its shape and/or position at the conveyor. Another benefit of the invention is that a light source can preferably be mounted in the actuation element and that openings in the actuation element allow the light to lighten a working area, e.g. in a dark loading area of a truck.

Although certain devices and products constructed in accordance with the teachings of the invention have been described herein, the scope of coverage of this patent is not limited thereto. On the contrary, this patent covers all embodiments of the teachings of the invention fairly falling within the scope of the appended claims.

## Claims

1. A conveyor comprising:
a base conveyor section (A),
at least one moveable conveyor section (B, C, D, 96) selectively positionable relative to the base conveyor section (A),
a conveyor member (4, 99) arranged to provide a conveying surface on said conveyor section,
at least one drive system arranged to drive at least one of the movable conveyor section and the conveyor member (4, 99), and
a contact sensor (46, 54, 108) connected to a control device for interrupting the movement of at least one of the conveyor member (4, 99) and the movable conveyor section in response to a signal generated by the contact sensor (46, 54, 108),
**characterized in that**:
said contact sensor (46, 54, 108) comprises at least one actuation element (48, 104) adapted for transferring both vertical and horizontal contact forces to said contact sensor (46, 54, 108), and
said actuation element (48, 104) being adapted to move at least partially in the direction of the vertical contact force.

2. The conveyor of claim 1, wherein the conveyor member (4, 99) comprises an endless conveyor belt.

3. The conveyor of claim 1 or 2, wherein the at least one conveyor section (B, C, D) is adapted to move telescopically relative to the base conveyor section (A) or the next inner conveyor section (B, C).

4. The conveyor of claim 1 or 2, wherein the conveyor section mounted at an outermost position is adapted to move pivotally relative to the base conveyor section (A) or to the next inner conveyor section (B, C).

5. The conveyor of claim 4, wherein the outermost conveyor section (96) is provided with a separate conveyor belt (99).

6. The conveyor of any of the preceding claims, wherein said actuation element (48, 104) is formed such that it provides a contact surface for receiving forces from both the vertical and horizontal directions.

7. The conveyor of any one of the preceding claims, wherein said contact sensor (46, 54, 108) comprises an electric switch (46, 54, 108).

8. The conveyor of any one of the preceding claims, wherein said actuation element (42, 48) comprises a wall (42) or shield part (48) mounted for allowing pivotal movement in respect to the contact sensor (46, 54).

9. The conveyor of any one of the preceding claims, wherein said actuation element (48) has a semi-circular shape.

10. The conveyor of claim 9, wherein said actuation element comprises a semi-circular shield part (48).

11. The conveyor of claim 10, wherein said semi-circular shield part (48) comprises a built-in control box for controlling the conveyor.

12. The conveyor of one of the preceding claims, wherein said actuation element (48, 104) comprises openings for transmitting light emitted from a build in light source through said openings.

13. The conveyor of one of the preceding claims, wherein said control device for interrupting movements comprises an electric brake (91) arranged to interrupt a movement of said conveyor sections.

14. The conveyor of claim 13, wherein said brake (91) is adapted to engage when a conveyor section movement is stopped at least by power failure, chains braking, sensing contact, sensing operational failures of the conveyor or by an operator's activity.

15. The conveyor of claim 13 or 14, wherein said brake (91) is adapted to be biased closed and actuated to a release position only when power is available and an operator deliberately activates a switch.

16. The conveyor of any one of the preceding claims, wherein said actuation element comprises a transverse elongated nose part (104) on an outermost end of the movable conveyor section which is enabled to be pressed in at least one of an upward and inward direction against one or more compression springs (107) by an upwardly or inwardly directed compression impact.

17. The conveyor of claim 16, wherein said nose part (104) comprises openings (106) and a light source mounted behind said openings (106) and inside of the nose part (104).

18. The conveyor of any one of the preceding claims, further comprising a short belt conveyor section (96) at an outermost or front position being adapted to swing relative to the base conveyor section (A) or to the next inner conveyor section (B, C), wherein said actuation element (48, 104) is mounted at the outermost end of said short belt conveyor section (96).

19. The conveyor of any one of the preceding claims, wherein the actuation element (104) comprises end flanges (110) which are arranged in bearing holes (112) mounted at the outermost end of the movable conveyor section.

20. The conveyor of claim 19, wherein said actuation element (104) is adapted to be displaced in both vertical and horizontal directions to activate said contact sensor (108).

21. The conveyor of one of the preceding claims, wherein the actuation element (48, 104) is mounted at the outermost end of the outermost of the at least one movable conveyor section (B, C, D, 96).

22. The conveyor of one of the preceding claims, wherein the actuation element (48, 104) extends over the whole width of the movable conveyor section.

## Patentansprüche

1. Förderer umfassend:
einen Basis-Förderabschnitt (A),
wenigstens einen beweglichen Förderabschnitt (B, C, D, 96), der wahlweise bezüglich dem Basis-Förderabschnitt (A) positionierbar ist,
ein Förderelement (4, 99), das eingerichtet ist, eine Förderoberfläche an dem Förderabschnitt bereitzustellen,
wenigstens ein Antriebssystem, das eingerichtet ist, wenigstens einen der beweglichen Förderabschnitte und das Förderelement (4, 99) anzutreiben, und
einen Kontaktsensor (46, 54, 108), der mit einer Steuervorrichtung verbunden ist, zum Unterbrechen der Bewegung wenigstens des Förderelements (4, 99) oder des beweglichen Förderabschnitts in Reaktion auf ein Signal, das durch den Kontaktsensor (46, 54, 108) erzeugt wird,
**dadurch gekennzeichnet, dass**:
der Kontaktsensor (46, 54, 108) wenigstens ein Betätigungsglied (48, 104) umfasst, das ausgelegt ist, sowohl vertikale als auch horizontale Kontaktkräfte an den Kontaktsensor zu übertragen, und
das Betätigungsglied (48, 104) ausgelegt ist, sich wenigstens teilweise in Richtung der vertikalen Kontaktkraft zu bewegen.

2. Förderer nach Anspruch 1, bei welchem das Förderelement (4, 99) ein Endlos-Förderband umfasst.

3. Förderer nach Anspruch 1 oder 2, bei welchem wenigstens ein Förderabschnitt (B, C, D) ausgelegt ist, sich teleskopartig bezüglich dem Basis-Förderabschnitt (A) oder dem nächst inneren Förderabschnitt (B, C) zu bewegen.

4. Förderer nach Anspruch 1 oder 2, bei welchem der Förderabschnitt, der an der äußersten Position angebracht ist, ausgelegt ist, sich bezüglich dem Basis-Förderabschnitt (A) oder dem nächst inneren Förderabschnitt (B, C) zu drehen.

5. Förderer nach Anspruch 4, bei welchem der äußerste Förderabschnitt (96) mit einem gesonderten Förderband (99) ausgestattet ist.

6. Förderer nach einem der vorhergehenden Ansprüche, bei welchem das Betätigungsglied (48, 104) so ausgebildet ist, dass es eine Kontaktoberfläche bereitstellt zum Aufnehmen von Kräften aus sowohl vertikaler als auch horizontaler Richtung.

7. Förderer nach einem der vorhergehenden Ansprüche, bei welchem der Kontaktsensor (46, 54, 108) einen elektrischen Schalter (46, 54, 108) umfasst.

8. Förderer nach einem der vorhergehenden Ansprüche, bei welchem das Betätigungsglied (42, 48) eine angebrachte Wand (42) oder ein Schutzteil (48) umfasst, um eine Drehbewegung bezüglich dem Kontaktsensor (46, 54) zu ermöglichen.

9. Förderer nach einem der vorhergehenden Ansprüche, bei welchem das Betätigungsglied (48) eine halbkreisartige Form aufweist.

10. Förderer nach Anspruch 9, bei welchem das Betätigungselement einen halbkreisartigen Schutzteil (48) umfasst.

11. Förderer nach Anspruch 10, bei welchem der halbkreisartige Schutzteil (48) einen eingebauten Steuerkasten zum Steuern des Förderers umfasst.

12. Förderer nach einem der vorhergehenden Ansprüche, bei welchem das Betätigungsglied (48, 104) Öffnungen umfasst, um Licht, das von einer eingebauten Lichtquelle abgestrahlt wird, durch die Öffnungen zu übertragen.

13. Förderer nach einem der vorhergehenden Ansprüche, bei welchem die Steuervorrichtung zur Unterbrechung der Bewegung eine elektrische Bremse (91) umfasst, die eingerichtet ist, eine Bewegung der Förderabschnitte zu unterbrechen.

14. Förderer nach Anspruch 13, bei welchem die Bremse (91) ausgelegt ist, einzugreifen, wenn die Förderabschnittbewegung gestoppt ist, durch wenigstens eins von: Stromversorgungsfehler, Kettenbruch, Erkennen eines Kontakts, Erkennen eines Betriebsfehlers des Förderers oder durch die Aktivität eines Benutzers.

15. Förderer nach Anspruch 13 oder 14, bei welchem die Bremse (91) ausgelegt ist, vorgespannt geschlossen zu sein und nur in eine Freigabeposition gelöst zu werden, wenn Strom verfügbar ist und ein Benutzer mit Absicht einen Schalter aktiviert.

16. Förderer nach einem der vorhergehenden Ansprüche, bei welchem das Betätigungselement einen querlaufenden, verlängerten Ansatzteil (104) an einem äußersten Ende des beweglichen Förderabschnitts umfasst, welcher eingerichtet ist, in wenigstens eine Aufwärts- oder Inwärtsrichtung gegen eine oder mehrere Druckfedern (107) durch eine aufwärts- oder inwärtsgerichtete Druckwirkung gedrückt zu werden.

17. Förderer nach Anspruch 16, bei welchem das Ansatzteil (104) Öffnungen (106) und eine Lichtquelle umfasst, die hinter den Öffnungen (106) und innerhalb des Ansatzteils (104) angebracht ist.

18. Förderer nach einem der vorhergehenden Ansprüche, ferner einen kurzen Bandförderabschnitt (96) an einer äußersten oder vorderen Position umfassend, der ausgelegt ist, bezüglich dem Basis-Förderabschnitt (A) oder dem nächst inneren Förderabschnitt (B, C) zu schwenken, wobei das Betätigungsglied (48, 104) an dem äußersten Ende des kurzen Bandförderabschnitts (96) angebracht ist.

19. Förderer nach einem der vorhergehenden Ansprüche, bei welchem das Betätigungselement (104) Endkanten (110) umfasst, die an Lagerlöchern (112) angebracht sind, die an dem äußersten Ende des beweglichen Förderabschnitts angebracht sind.

20. Förderer nach Anspruch 19, bei welchem das Betätigungsglied (104) ausgelegt ist, sowohl in vertikale als auch in horizontale Richtung verschoben zu werden, um den Kontaktsensor (108) zu aktivieren.

21. Förderer nach einem der vorhergehenden Ansprüche, bei welchem das Betätigungselement (48, 104) an dem äußersten Ende des äußersten des wenigstens einen beweglichen Förderabschnitts (B, C, D, 96) angebracht ist.

22. Förderer nach einem der vorhergehenden Ansprüche, bei welchem sich das Betätigungselement (48, 10) über die gesamte Breite des beweglichen Förderabschnitts erstreckt.

## Revendications

1. Transporteur à bande comprenant .
■ une section de transporteur à bande de base (A),
■ au moins une section de transporteur à bande mobile (B, C, D, 96) pouvant être sélectivement positionnée par rapport à la section de transporteur à bande de base (A),
■ un élément de transporteur à bande (4, 99) agencé pour offrir une surface de transport sur bande sur ladite section de transporteur à bande,
■ au moins un système d'entraînement agencé pour entraîner au moins un élément parmi la section de transporteur à bande mobile et l'élément de transporteur à bande (4, 99), et
■ un capteur de contact (46, 54, 108) relié à un dispositif de commande destiné à interrompre le déplacement d'au moins un élément parmi l'élément de transporteur à bande (4, 99) et la section de transporteur à bande mobile en réponse à un signal généré par le capteur de contact (46, 54, 108),
**caractérisé en ce que** :
■ ledit capteur de contact (46, 54, 108) comprend au moins un élément d'actionnement (48, 104) adapté pour transférer des forces de contact verticales et horizontales vers ledit capteur de contact (46, 54, 108), et
■ ledit élément d'actionnement (48, 104) étant adapté pour se déplacer au moins partiellement dans la direction de la force de contact verticale.

2. Transporteur à bande selon la revendication 1, dans lequel l'élément de transporteur à bande (4, 99) comprend une courroie de transporteur à bande sans fin.

3. Transporteur à bande selon la revendication 1 ou 2, dans lequel la au moins une section de transporteur à bande (B, C, D) est adaptée pour se déplacer de manière télescopique par rapport à la section de transporteur à bande de base (A) ou à la section de transporteur à bande intérieure suivante (B, C).

4. Transporteur à bande selon la revendication 1 ou 2, dans lequel la section de transporteur à bande montée au niveau d'une position la plus extérieure est adaptée pour se déplacer de manière pivotante par rapport à la section de transporteur à bande de base (A) ou à la section de transporteur à bande intérieure suivante (B, C) .

5. Transporteur à bande selon la revendication 4, dans lequel la section de transporteur à bande la plus extérieure (96) est dotée d'une courroie de transporteur à bande séparée (99).

6. Transporteur à bande selon l'une quelconque des revendications précédentes, dans lequel ledit élément d'actionnement (48, 104) est formé de sorte qu'il offre une surface de contact destinée à recevoir des forces provenant des directions verticales et horizontales.

7. Transporteur à bande selon l'une quelconque des revendications précédentes, dans lequel ledit capteur de contact (46, 54, 108) comprend un commutateur électrique (46, 54, 108).

8. Transporteur à bande selon l'une quelconque des revendications précédentes, dans lequel ledit élément d'actionnement (42, 48) comprend une paroi (42) ou partie de protection (48) montée pour permettre le déplacement pivotant par rapport au capteur de contact (46, 54).

9. Transporteur à bande selon l'une quelconque des revendications précédentes, dans lequel ledit élément d'actionnement (48) a une forme semi-circulaire.

10. Transporteur à bande selon la revendication 9, dans lequel ledit élément d'actionnement comprend une partie de protection semi-circulaire (48) .

11. Transporteur à bande selon la revendication 10, dans lequel ladite partie de protection semi-circulaire (48) comprend un boîtier de commande intégré destiné à commander le transporteur à bande.

12. Transporteur à bande selon l'une des revendications précédentes, dans lequel ledit élément d'actionnement (48, 104) comprend des ouvertures destinées à transmettre de la lumière émise depuis une source de lumière intégrée à travers lesdites ouvertures.

13. Transporteur à bande selon l'une des revendications précédentes, dans lequel ledit dispositif de commande destiné à interrompre les déplacements comprend un frein électrique (91) agencé pour interrompre un déplacement desdites sections de transporteur à bande.

14. Transporteur à bande selon la revendication 13, dans lequel ledit frein (91) est adapté pour se mettre en prise lorsqu'un déplacement de section de transporteur à bande est arrêté au moins par coupure de courant, freinage des chaînes, détection de contact, détection de défaillances fonctionnelles du transporteur à bande ou par l'activité d'un opérateur.

15. Transporteur à bande selon la revendication 13 ou 14, dans lequel ledit frein (91) est adapté pour être poussé dans un état fermé et actionné dans une position de relâchement seulement lorsque la puissance est disponible et un opérateur active délibérément un commutateur.

16. Transporteur à bande selon l'une quelconque des revendications précédentes, dans lequel ledit élément d'actionnement comprend une partie de nez allongée transversale (104) sur une extrémité la plus extérieure de la section de transporteur à bande mobile qui peut être pressée dans au moins une direction parmi une direction vers le haut et une direction vers l'intérieur contre un ou plusieurs ressorts de compression (107) par un impact de compression dirigé vers le haut ou vers l'intérieur.

17. Transporteur à bande selon la revendication 16, dans lequel ladite partie de nez (104) comprend des ouvertures (106) et une source de lumière montée derrière lesdites ouvertures (106) et à l'intérieur de la partie de nez (104).

18. Transporteur à bande selon l'une quelconque des revendications précédentes, comprenant en outre une section de transporteur à bande à courroie courte (96) au niveau d'une position la plus extérieure ou avant adaptée pour osciller par rapport à la section de transporteur à bande de base (A) ou à la section de transporteur à bande intérieure suivante (B, C), ledit élément d'actionnement (48, 104) étant monté au niveau de l'extrémité la plus extérieure de ladite section de transporteur à bande à courroie courte (96).

19. Transporteur à bande selon l'une quelconque des revendications précédentes, dans lequel l'élément d'actionnement (104) comprend des brides d'extrémités (110) qui sont agencées dans des trous de support (112) montés au niveau de l'extrémité la plus extérieure de la section de transporteur à bande mobile.

20. Transporteur à bande selon la revendication 19, dans lequel ledit élément d'actionnement (104) est adapté pour être déplacé dans les directions verticales et horizontales pour activer ledit capteur de contact (108).

21. Transporteur à bande selon l'une des revendications précédentes, dans lequel l'élément d'actionnement (48, 104) est monté au niveau de l'extrémité la plus extérieure de la plus extérieure de la au moins une section de transporteur à bande mobile (B, C, D, 96).

22. Transporteur à bande selon l'une des revendications précédentes, dans lequel l'élément d'actionnement (48, 104) s'étend sur toute la largeur de la section de transporteur à bande mobile.
